# EUROPEAN PATENT SPECIFICATION

(11) **EP 1 880 613 B1**
(45) Date of publication and mention of the grant of the patent: **30.09.2009**
(21) Application number: 06757969.8
(22) Date of filing: 19.05.2006
(51) Int. Cl.: A23C 20/00

(54) **COMPOSITION FOR PRODUCING ARTIFICIAL CHEESE**
ZUSAMMENSETZUNG ZUR HERSTELLUNG EINES KÄSESUBSTRATS
COMPOSITION PERMETTANT DE PRODUIRE UN SUBSTITUT DE FROMAGE

(43) Date of publication of application: 23.01.2008
(73) Proprietor: Singer, Ilia Eduardowitsch, 98000 Monaco (MC)
(72) Inventor: SINGER, Ilia Eduardowitsch, (MC)
(74) Representative: Ziebig, Marlene
(86) International application number: PCT/RU2006/000267
(87) International publication number: WO 2007/136291

(56) References cited:
- EP-A- 0 635 215
- FR-A- 2 261 711
- GB-A- 2 255 489
- RU-C2- 2 259 050
- US-A- 4 556 569
- US-A- 4 608 265
- US-A- 4 684 533
- US-A- 5 807 601
- US-A1- 2002 076 474
- DATABASE WPI Week 200639 Derwent Publications Ltd., London, GB; AN 2006-378367 XP002473453 & RU 2 276 849 C1 (GURME CO LTD) 27 May 2006 (2006-05-27)

## Description

### Technical field

The invention relates to food-processing industry and can be used as a concentrate for producing a natural cheese simulating product.

### Background art

The appearance of cheese substitutes was caused by the desire to lower the product cost and reduce the amount of cholesterol and saturated fats therein. In the past this was achieved by replacing the expensive milk fat with cheaper vegetable fat, in particular with caseinate. Such cheese substitutes were produced by means of traditional methods from skimmed milk, curd, etc., see US, C, 5068118.

However, cheese substitutes based on caseinate remained fairly expensive.

US 4556569 describes a cheese analog made with vegetable protein having a natural pH of about 7.0 ± 0.5 and being a water dispersion.

A further known composition for producing a cheese substitute comprises an acidifier in an amount that makes the composition pH not more than 4.6; hydrocolloid; a component produced from cheese amounting to less than 33 wt% of the composition; and a cheese aromatizer that can be natural or artificial; during the preparation of the cheese substitute liquid is added in the amount of at least 60 wt% of the composition; see RU, 2004101965, A.

This composition comprises a substantial amount of the component obtained from natural cheese, which makes the end product more expensive.

Another known composition for producing a cheese substitute comprises a fatty component, a protein component, granular starch, noncarbohydrate starch and a hydrocolloid stabilizer, said components having the following ratio (in the end product), wt%: fatty component - 0-30, protein component - 0-2, granular starch - 3-30, noncarbohydrate starch - 0.5-25, hydrocolloid stabilizer 0.5-5; water is added to the composition during the preparation of the cheese substitute, see US, C, 5807601.

This engineering solution is taken as a prototype of the present invention.

The disadvantage of said known composition is in its highly complex content and complex technology of producing of its components, which raises the cost of the end product, and in the fact that in order to obtain a composition that is durable and produces end product with firm texture, a stabilizer must be introduced into the composition.

### Summary of the invention

It is an object of the present invention to provide a low-cost composition for producing a natural cheese simulating product that contains easily available low-cost components, said composition and the end product produced thereof having the taste and structure of natural milk cheese, as well as balanced content of saturated and unsaturated acids, and wherein the composition provides a possibility for obtaining various special cheese flavours and has a long shelf life.

According to the invention there is provided a composition for producing a natural cheese simulating product, which comprises fatty and protein components, where hardened vegetable fat is used as the fatty component, and collagen and caseinate are used as the protein component, said components being used in the following ratio, wt%:

| | |
|---|---|
| collagen | - 10-20 |
| caseinate | - 10-20 |
| hardened vegetable fat | - 44-70. |

The composition additionally comprises 6-8 wt% of an aromatizer and/or 4-8 wt% of edible salt.

The applicant hasn't found any source of information containing data on cheese substitute compositions having contents identical to the present invention. In applicant's opinion, this enables to conclude that the invention conforms to the criterion "Novelty" (N).

The novel features of the invention provide an object with important new properties as follows.

Collagen's ability to swell and conglutinate makes it a structure forming element. By introducing collagen into the composition, said composition and the product produced thereof, cheese substrate, acquire firm texture typical for natural milk cheese; the end product "keeps its shape" and can be moulded into a block of any shape. If the composition contains less than 10 wt% of collagen, the structure required for forming the shape of the cheese substitute is not produced and the texture of the composition is not firm; if the content of collagen exceeds 20 wt%, the cost of the composition and, consequently, of the cheese substitute produced thereof increases.

Caseinate, which can be embodied as calcium or sodium caseinate, is a milk protein that gives the cheese substitute the taste, flavour and firmness of natural milk cheese. Sodium caseinate provides a firmer structure of the cheese substitute, while calcium caseinate makes the end product more plastic. If the composition contains less than 10 wt% of caseinate, its cheese taste is too weak, and if the content of caseinate exceeds 20 wt%, the taste of the composition is too strong and oversaturated and, besides, the cost of the concentrate and, consequently, of the cheese substitute produced thereof increases.

The use of hardened vegetable fat as the fatty component lowers the cost of the end product. Hardened vegetable fat can be embodied as any vegetable oil hardened by means of hydrogenising, fractionating, interesterification, etc. It can also be embodied as such fats as, in particular, palm oil, soybean oil or ready-made special-purpose fats, for example, "Akocheese A" manufactured by "Karlshamns AB" company (Sweden). Owing to the fact that in the process of fat hardening the ballast agents are removed from it, the use of such fat allows increasing the shelf life of both the composition and the cheese substitute produced thereof. Hardened vegetable fat doesn't contain any cholesterol, and the content of saturated and unsaturated fatty acids in the fat is balanced. In the present composition vegetable fat provides a medium for dispersion of other solid components. If the composition contains less than 44 wt% of this component, the end product becomes a hard non-homogeneous mass with clots that easily crumbles, and if the content exceeds 70 wt%, the composition will not harden.

The aromatizer, which can be embodied as a natural or artificial aromatizer of cheeses Cheddar, Gouda, Parmesan, Shvetzarskiy (Swiss), Sovetskiy (Soviet), etc., gives the composition a particular special cheese flavour. If the composition contains less than 6 wt% of the aromatizer, the composition has no pronounced taste, and if the content exceeds 8 wt%, the taste of the composition becomes too strong and oversaturated, and the product may provoke allergic reactions.

If the content of edible salt is less than 4 wt%, its taste is virtually imperceptible; besides, too small concentrations of edible salt, which is a preservation agent, can't have any marked preserving effect; and if the content of the salt exceeds 8 wt%, the product becomes too salty.

Owing to the optimal ratio of the components, the composition and the end product produced thereof have the taste and texture of natural milk cheese, as well as balanced content of saturated and unsaturated acids; as a result, the end product has high nutritional value and low cost at the same time. The composition provides a possibility for obtaining various special cheese flavours and has a long shelf life.

The applicant hasn't found any source of information containing data on the influence of the inventive novel features on the technical result produced through the realization of said features. In applicant's opinion, this enables to conclude that the present engineering solution conforms to the criterion "Inventive Step" (IS).

### Brief description of the drawings

The present invention is further explained, by way of example, without references to any drawings.

### Preferred embodiment

A series of tests were conducted in order to confirm the inventive intervals of the content of the components in the composition. The results of the tests are illustrated by the examples presented in the tables:
- Table 1 shows quantitative values of the contents of the components in the composition as claimed in claim 1;
- Table 2 shows characteristics that were obtained in the examples from Table 1;
- Table 3 shows quantitative values of the contents of the components in the composition as claimed in claim 2;
- Table 4 shows characteristics that were obtained in the examples from Table 3;
- Table 5 shows quantitative values of the contents of the components in the composition as claimed in claim 3;
- Table 6 shows characteristics that were obtained in the examples from Table 5;
- Table 7 shows quantitative values of the contents of the components in the composition as claimed in claim 4;
- Table 8 shows characteristics that were obtained in the examples from Table 7.

The inventive composition is produced in the following way.

Hardened vegetable fat is placed into a working tank with a hinged lid and a heat-exchange casing, and an impeller mixer placed within the tank. Fat is heated to a temperature of 65 ± 5°C. Then all other dry components are placed in the tank and mixed during 5-7 minutes until the mixture becomes homogeneous. The ratio of the components is chosen as in corresponding example. As a result, a composition is produced in the form of dispersion with fluid viscous consistency, having typical taste and odour of cheese. The obtained homogeneous mixture is poured into a tank and cooled to a temperature of 0 - (+5)°C. The resulting homogeneous mass has firm texture with typical taste and odour of cheese, with the colour ranging from light yellow to saturated yellow, depending on the example. The temperature of 0 - (+5)°C is the storage temperature of the finished composition.

The study of the composition properties was conducted in a laboratory environment: the contents of the components in the composition is described in tables 1, 3, 5 and 7, the obtained characteristics are shown in tables 2, 4, 6 and 8.

The provided examples allow determining the optimal ratio of the components that provides optimal price/quality relationship of the composition and of the natural cheese simulating product produced thereof. The composition contains easily available low-cost components, has the taste and structure of natural milk cheese and provides a possibility for obtaining various special cheese flavours.

### Industrial applicability

Known substances and manufacturing equipment are used for the realization of the invention, which in applicant's opinion enables to conclude that the invention conforms to the criterion "Industrial Applicability" (IA).

**Table 1**

| Component, wt% | Values for the example | | | | |
|---|---|---|---|---|---|
| | | II | III | IV | V |
| Collagen | | 20 | 15 | 5 | 30 |
| Caseinate | | 20 | 17 | 5 | 25 |
| | | (NA) | (CA) | (NA) | (CA) |
| Hardened | | 60 | 68 | 90 | 45 |
| vegetable fat | | Soy-bean oil | Ako cheese A | Palm oil | Soy-bean oil |

IV and V are comparison examples.

**Table 2**

| Quality characteristics | Values for the example | | | | |
|---|---|---|---|---|---|
| | | II | III | IV | V |
| Texture | | Homogeneous firm | Homogeneous firm | Homogeneous liquid | Non-homogeneous firm, with clots, crumbles |
| Colour | | Yellow | Yellow | Yellow | Yellow |
| Taste | | Non-salty weak creamy taste | Non-salty weak creamy taste | Non-salty neutral taste | Non-salty, strong specific caseinate taste |
| Odour | | Weak creamy odour | Weak creamy odour | Neutral odour | Strong specific caseinate odour |

**Table 3**

| Component, wt% | Values for the example | | | | | | |
|---|---|---|---|---|---|---|---|
| | | II | III | IV | V | VI | VII |
| Collagen | | 20 | 15 | 5 | 30 | 15 | 15 |
| Caseinate | | 20 (NA) | 17 (CA) | 5 (NA) | 25 (CA) | 15 (CA) | 15 (CA) |
| Aromatizer | | 8 Gouda | 7 Parmesan | 7 Shvetzarskiy | 7 Sovetskiy | 4 Gouda | 12 Gouda |
| Hardened vegetable fat | | 52 Soy-bean oil | 61 Ako chee se A | 83 Palm oil | 38 Soy-bean oil | 66 Soy-bean oil | 58 Soy-bean oil |

IV to VII are comparison examples.

**Table 4**

| Quality charac teristics | Values for the example | | | | | | |
|---|---|---|---|---|---|---|---|
| | | II | III | IV | V | VI | VII |
| Texture | | Homo geneous firm | Homo geneous firm | Homo geneous liquid | Non-homo geneous firm, with clots, crumbles | Homo geneous firm | Homo geneous firm |
| Colour | | Yellow | Yellow | Yellow | Yellow | Yellow | Yellow |
| Taste | | Non-salty pro nounced Gouda cheese taste | Non-salty pro nounced Parme san cheese taste | Non-salty weak Shvetzarskiy cheese taste | Non-salty, strong specific flavour of casei nate and Sovet skiy cheese | Non-salty, weak Gouda cheese taste | Non-salty, strong, oversaturated Gouda cheese taste |
| Odour | | Pro nounced Gouda cheese odour | Pro nounced Parme san cheese odour | Weak Shvet zarskiy cheese odour | Strong specific flavour of casei nate and Sovetskiy cheese | Weak Gouda cheese odour | Strong, oversa turated Gouda cheese odour |

**Table 5**

| Component, wt% | Values for the example | | | | | | |
|---|---|---|---|---|---|---|---|
| | | II | III | IV | V | VI | VII |
| Collagen | | 20 | 15 | 5 | 30 | 15 | 15 |
| Caseinate | | 20 (NA) | 17 (CA) | 5 (NA) | 25 (CA) | 15 (CA) | 15 (CA) |
| Edible salt | | 8 | 6 | 5 | 6 | 2 | 10 |
| Hardened vegetable fat | | 52 Soy-bean oil | 62 Ako chee se A | 85 Palm oil | 39 Soy-bean oil | 68 Soy-bean oil | 60 Soy-bean oil |

IV to VII are comparison examples.

**Table 6**

| Quality charac teristics | Values for the example | | | | | | |
|---|---|---|---|---|---|---|---|
| | | II | III | IV | V | VI | VII |
| Texture | | Homo geneous firm | Homo geneous firm | Homo geneous liquid | Non-homo geneous firm, with clots, crumbles | Homo geneous firm | Homo geneous firm |
| Colour | | Yellow | Yellow | Yellow | Yellow | Yellow | Yellow |
| Taste | | Salty weak creamy taste | Salty weak creamy taste | Salty neutral taste | Salty strong specific taste of caseinate | Slightly salty creamy taste | Very salty creamy taste |
| Odour | | Weak creamy odour | Weak creamy odour | Neutral odour | Strong specific odour of caseinate | Weak creamy odour | Weak creamy odour |

**Table 7**

| Component, wt% | Values for the example | | | | | | |
|---|---|---|---|---|---|---|---|
| | I | II | III | IV | V | VI | VII |
| Collagen | 10 | 20 | 15 | 5 | 30 | 15 | 15 |
| Caseinate | 10 (CA) | 20 (NA) | 17 (CA) | 5 (NA) | 25 (CA) | 15 (CA) | 15 (CA) |
| Aromatizer | 6 Ched dar | 8 Gouda | 7 Par mesan | 7 Shve tzar skiy | 7 Sovet skiy | 4 Gouda | 12 Gouda |
| Edible salt | 4 | 8 | 6 | 5 | 6 | 2 | 10 |
| Hardened vegetable fat | 70 Palm oil | 44 Soy-bean oil | 55 Ako chee se A | 78 Palm oil | 32 Soy-bean oil | 64 Soy-bean oil | 48 Soy-bean oil |

IV to VII are comparison examples.

**Table 8**

| Quality characte ristics | Values for the example | | | | | | |
|---|---|---|---|---|---|---|---|
| | I | II | III | IV | V | VI | VII |
| Texture | Homo geneous firm | Homo geneous firm | Homo geneous firm | Homo geneous liquid | Non-homogeneous firm, with clots, crum-bles | Homogeneous firm | Homo geneous firm |
| Colour | Yellow | Yellow | Yellow | Yellow | Yellow | Yellow | Yellow |
| Taste | Salty pro nounced Cheddar cheese taste | Salty pro nounced Gouda cheese taste | Salty pro nounced Parme san cheese taste | Salty weak milky taste of Shvetzarskiy cheese | Salty strong specific flavour of caseinate and Sovetskiy cheese | Slightly salty weak Gouda cheese taste | Very salty strong oversa turated Gouda cheese taste |
| Odour | Pro nounced Cheddar cheese odour | Pro nounced Gouda cheese odour | Pro nounced Parmesan cheese odour | Weak Shvet zarskiy cheese odour | Strong specific odour of caseinate and Sovetskiy cheese | Weak Gouda cheese odour | Strong oversa turated Gouda cheese odour |

## Claims

1. A composition for producing a natural cheese simulating product, which comprises fatty and protein components, **characterized in that** hardened vegetable fat is used as the fatty component, and collagen and caseinate are used as the protein component, said components being used in the following ratio, wt%:
| | |
|---|---|
| collagen | - 10-20 |
| caseinate | - 10-20 |
| hardened vegetable fat | - 44-70. |

2. A composition as claimed in claim 1, **characterized in that** it additionally comprises 6-8 wt% of an aromatizer.

3. A composition as claimed in claim 1, **characterized in that** it additionally comprises 4-8 wt% of edible salt.

4. A composition as claimed in claim 1, **characterized in that** it additionally comprises 6-8 wt% of an aromatizer and 4-8 wt% of edible salt.

## Patentansprüche

1. Zusammensetzung zur Herstellung eines Naturkäse-Imitats, umfassend Fett- und Proteinbestandteile, **dadurch gekennzeichnet, dass** gehärtetes Pflanzenfiett als Fettbestandteil verwendet wird und Collagen und Caseinat als Proteinbestandteile verwendet werden, wobei die Bestandteile in folgendem Verhältnis in Gew.-% verwendet werden:
| | |
|---|---|
| Collagen | 10-20 |
| Caseinat | 10-20 |
| gehärtetes Pflanzenfett | 44-70. |

2. Zusammensetzung nach Anspruch 1, **dadurch gekennzeichnet, dass** sie zusätzlich 6-8 Gew.-% eines Aromastoffs umfasst.

3. Zusammensetzung nach Anspruch 1, **dadurch gekennzeichnet, dass** sie zusätzlich 4-8 Gew.-% Speisesalz umfasst.

4. Zusammensetzung nach Anspruch 1, **dadurch gekennzeichnet, dass** sie zusätzlich 6-8 Gew.-% eines Aromastoffs und 4-8 Gew.-% Speisesalz umfasst.

## Revendications

1. Composition pour produire un produit succédané de fromage naturel qui comprend des composantes grasses et de protéine, **caractérisée en ce qu'**on utilise de la graisse végétale durcie comme composante grasse et du caséinate et du collagène comme composantes de protéine, les dites composantes étant utilisées dans le rapport suivant, en % de poids :
| | |
|---|---|
| collagène | 1 - 20 |
| caséinate | 10 - 20 |
| graisse végétale durcie | 44 - 70. |

2. Composition selon la revendication 1, **caractérisée en ce qu'**elle comprend en plus 6 à 8 % en poids d'un agent aromatisant.

3. Composition selon la revendication 1, **caractérisée en ce qu'**elle comprend en plus 4 à 8 % en poids d'un sel alimentaire.

4. Composition selon la revendication 1, **caractérisée en ce qu'**elle comprend en plus 6 à 8 % en poids d'un agent aromatisant et 4 à 8 % en poids d'un sel alimentaire.
